# EUROPÄISCHE PATENTSCHRIFT

(11) **EP 0 663 929 B1**
(45) Veröffentlichungstag und Bekanntmachung des Hinweises auf die Patenterteilung: **03.09.2003**
(21) Anmeldenummer: 93912729.6
(22) Anmeldetag: 19.05.1993
(51) Int. Cl.: C08G 18/12, C08G 18/32, C08G 18/08, C09D 175/04

(54) **WÄSSRIGES BINDEMITTELGEMISCH UND SEINE VERWENDUNG**
AQUEOUS BINDER MIXTURE AND USE OF THE MIXTURE
MELANGE AQUEUX DE LIANTS ET SON UTILISATION

(30) Priorität: 02.06.1992 DE 4218184
(43) Veröffentlichungstag der Anmeldung: 26.07.1995
(73) Patentinhaber: BAYER AG, 51368 Leverkusen (DE)
(72) Erfinder: KÖNIG, Eberhard, D-6093 Flörsheim 3 (DE); PEDAIN, Josef, D-5000 Köln 80 (DE)
(86) Internationale Anmeldenummer: EP9301253
(87) Internationale Veröffentlichungsnummer: WO93024550

(56) Entgegenhaltungen:
- EP-A- 0 355 682
- WO-A-81/02894
- US-A- 4 501 852

## Beschreibung

Die Erfindung betrifft ein wäßriges Bindemittelgemisch, bestehend im wesentlichen aus eines wäßrigen Lösung und/oder Dispersion einer Kombination aus einem in Wasser löslichen und/oder dispergierbaren NCO-Vorpolymerisat mit blockierten Isocyanatgruppen und einer Polyamin-Komponente mit primären und/oder sekundären, (cyclo)aliphatisch gebundenen Aminogruppen und die Verwendung dieses Bindemittelgemischs zur Herstellung von Beschichtungen auf hitzeresistenten Substraten.

Die Herstellung von wäßrigen PUR-Dispersionen ist bekannt und wird beispielsweise in dem Review-Artikel von J.W. Rosthauser und K. Nachtkamp "Waterborne Polyurethanes" in Advances in Urethanes Science and Technology, Bd. 10, 1987, S. 121 bis 162, beschrieben. Zum Stand der Technik, wie beispielsweise in der US-Patentschrift 4 308 184 und der EP-A-0 355 682 erläutert, gehört hierbei, daß man wäßrige PUR-Dispersionen vor der Applikation mit Melamin-Formaldehyd-Harzen mischt. Durch diese Maßnahme erhält der thermisch ausgehartete Beschichtungsfilm einen vernetzten, duromeren Charakter und wird wasser-und lösungsmittelresistent. Nachteilig an dieser Vernetzungsmethode ist, abgesehen von den Schwierigkeiten beim Umgang mit Formaldehyd-freisetzenden Substanzen, die Tatsache, daß derart modifizierte PUR-Dispersionen ein beschränktes "Potlife" besitzen und daher kein EK-System darstellen.

Auch echte, d.h. praktisch unbegrenzt lagerstabile wäßrige Einkomponenten-Bindemittel auf Polyurethanbasis sind bereits bekannt (DE-OS 3 345 448). Es handelt sich hierbei um Gemische zweier wäßriger PUR-Dispersionen, wobei die eine OH-Gruppen, die andere mit ε-Caprolactam blockierte NCO-Gruppen enthält. Der Nachteil dieser wäßrigen Einkomponenten-Bindemittel besteht darin, daß für die thermische Vernetzung sehr hohe Temperaturen von ca. 170°C erforderlich sind.

Die der Erfindung zugrunde liegende Aufgabe bestand daher darin, bei Raumtemperatur lagerstabile wäßrige Bindemittelgemische zur Verfügung zu stellen, die bei vergleichsweise niedrigen Vernetzungstemperaturen im Bereich von 120 bis 150°C aushärtbar sind und zur Herstellung von Beschichtungen mit hochwertigen lacktechnischen Eigenschaften eingesetzt werden können.

Diese Aufgabe konnte mit der Bereitstellung des nachstehend näher beschriebenen erfindungsgemäßen wäßrigen Bindemittelgemischs gelöst werden.

Gegenstand der Erfindung ist ein wäßriges Bindemittelgemisch bestehend im wesentlichen aus einer wäßrigen Lösung und/oder Dispersion erhältlich durch zumindest teilweise Neutralisation
a) mindestens eines, in Gegenwart der Komponente b) in Wasser löslichen und/oder dispergierbaren, Urethan- und Carbonsäuregruppen aufweisenden NCO-Vorpolymerisat mit blockierten Isocyanatgruppen mit
b) einer Polyamin-Komponente, bestehend aus mindestens einem organischen Polyamin des Molekulargewichts bereichs 60 bis 400 mit insgesamt mindestens zwei primären und/oder sekundären, aliphatisch oder cycloaliphatisch gebundenen Aminogruppen
wobei das Molverhältnis von blockierten Isocyanatgruppen zu primären und/oder sekundären Aminogruppen von 1:0,9 bis 1:1,5 beträgt und wobei andere Baren, die mit der komponente a) Salze bilden abwesend sind.

Gegenstand der Erfindung ist auch die Verwendung dieses wäßrigen Bindemittelgemisch gegebenenfalls in Abmischung mit üblichen Hilfs- und Zusatzmitteln der Lacktechnologie zur Herstellung von Beschichtungen auf hitzeresistenten Substraten.

Bei der erfindungsgemäßen Bindemittelkomponente a) handelt es sich um urethangruppenaufweisende, hydrophil modifizierte NCO-Vorpolymerisate mit blockierten Isocyanatgruppen, die zumindest in Gegenwart der Komponente b) in Wasser löslich und/oder dispergierbar sind.

Besonders gut als Komponente a) geeignete NCO-Vorpolymerisate sind solche, die
pro Molekül mindestens zwei blockierte Isocyanatgruppen bei einem Gehalt an blockierten Isocyanatgruppen (berechnet als NCO) von 2 bis 10, vorzugsweise 3 bis 6 Gew.-%,
einen Gehalt an innerhalb von end- und/oder seitenständigen Polyetherketten eingebauten Ethylenoxideinheiten (berechnet als C₂H₄O) von 5 bis 20, vorzugsweise 8 bis 15 Gew.-% und
einen Gehalt an zumindest teilweise durch Reaktion mit der Komponente b) neutralisierten Carboxylgruppen von 10 bis 60, vorzugsweise 15 bis 40 Milliäquivalenten pro 100 g Feststoff
aufweisen, wobei der Gesamtgehalt an Ethylenoxideinheiten der genannten Art und Carboxyl- bzw. Carboxylatgruppen so bemessen sein muß, daß die Vorpolymerisate zumindest in Gegenwart der Komponente b) in Wasser löslich und/oder dispergierbar sind.

Vorzugsweise erfolgt bei der Herstellung der Vorpolymerisate a) bezüglich der ionischen Modifizierung lediglich ein Einbau von Carboxylgruppen, die in wäßriger Phase durch Wechselwirkung mit den Polyaminen b) zumindest teilweise zu stark hydrophilen Carboxylatgruppen neutralisiert werden, so daß die Löslichkeit beziehungsweise Dispergierbarkeit der Komponente a) in Wasser von der gleichzeitigen Anwesenheit der Komponente b) abhängig sein kann, aber nicht abhängig sein muß, falls nämlich die Hydrophilie der Komponente a) ausreichend hoch ist, um die Löslichkeit beziehungsweise Dispergierbarkeit der Komponente a) in Wasser auch in Abwesenheit der Komponente b) gewährleisten.

Zur Herstellung der NCO-Vorpolymerisate a) werden 1) organische Polyisocyanate, 2) höhermolekulare Polyhydroxylverbindungen, gegebenenfalls 3) niedermolekulare Kettenverlängerungsmittel, 4) hydrophile Aufbaukomponenten und 5) Blockierungsmittel für Isocyanatgruppen eingesetzt.

Geeignete Polyisocyanate 1) sind die bekannten aromatischen oder (cyclo)aliphatischen Polyisocyanate, wie sie beispielsweise in Houben-Weyl, Methoden der organischen Chemie, Bd. 14/2, S. 61 bis 70 und dem Artikel von W. Siefken in Justus Liebigs Annalen der Chemie 562, 75 bis 136, beschrieben sind. Als aromatische Polyisocyanate seien beispielhaft 2,4-Diisocyanatotoluol, dessen technische Gemische mit bis zu 35 Gew.-%, bezogen auf Gemisch, an 2,6-Diisocyanatotoluol, 4,4'-Diisocyanatodiphenylmethan, dessen technische Gemische mit bis zu 50, vorzugsweise bis zu 40 Gew.-%, bezogen auf Gemisch, an 2,4'-Diisocyanatodiphenylmethan, sowie gegebenenfalls bis zu 5 Gew.-%, bezogen auf Gemisch, an 2,2'-Diisocyanatodiphenylmethan, Gemische der genannten Diisocyanatodiphenylmethan-Isomeren mit ihren höheren, mehr als 2 Isocyanatgruppen aufweisenden Homologen, wobei diese Gemische im allgemeinen mindestens 80 Gew.-% der genannten Diisocyanatodiphenylmethan-Isomeren aufweisen, sowie beliebige Gemische der beispielhaft genannten Polyisocyanate. Als aliphatische Polyisocyanate seien beispielhaft Hexamethylendiisocyanat (HDI), 2-Methylpentamethylendiisocyanat, 2,2,4-Trimethyl-hexamethylendiisocyanat (THDI), Isophorondiisocyanat (IPDI), 1,4-Diisocyanatomethyl-cyclohexan, Tetramethylxylylendiisocyanat (TMXDI) genannt.

Auch die bekannten "Lackpolyisocyanate", insbesondere auf Basis von HDI und/oder IPDI, insbesondere die bekannten Biuretgruppen, Isocyanuratgruppen und/oder Uretdiongruppen-aufweisenden Derivate dieser Diisocyanate können als Ausgangskomponente 1) zur Herstellung der blockierten Polyisocyanate a) eingesetzt werden. Auch die Verwendung von beliebigen Gemischen der beispielhaft genannten Polyisocyanate ist möglich.

Bei den Polyhydroxylverbindungen 2) handelt es sich insbesondere um die aus der Polyurethan-Chemie an sich bekannten Polyester- und/oder Polyetherpolyole, die pro Molekül mindestens 2, vorzugsweise 2 bis 4 Hydroxylgruppen und ein aus OH-Gehalt und -Funktionalität errechenbares Molekulargewicht von 400 bis 10.000, vorzugsweise 500 bis 3 000 aufweisen. Vorzugsweise werden entweder entsprechende Polyesterpolyole oder Gemische von Polyester- und Polyetherpolyolen verwendet.

Geeignete Polyesterpolyole sind auch Polyactondiole, beispielsweise Umsetzungsprodukte von hexandiol-1,6 mit ε-Caprolacton insbesondere des Molekulargewichtsbereichs 500 bis 1.500.

Ebenfalls geeignete Polyesterpolyole sind Polycarbonatdiole, insbesondere Hexandiol-1,6-polycarbonatdiole des Molekulargewichtsbereichs 500 bis 2.000, wie sie durch Kondensation von Diolen, insbesondere 1,6-Hexandiol, mit Diphenylcarbonat oder Dimethylcarbonat in an sich bekannter Weise zugänglich sind.

Ein Teil der Polyesterpolyole kann auch aus schwerverseifbaren Oligoestern langkettiger, hydroxylgruppenhaltiger Carbonsäure bestehen. Hier sei Rizinusöl beispielhaft genannt.

Bei den Polyhydroxypolyethern handelt es sich um die an sich bekannten Polyadditionsprodukte von Epoxiden, z.B. Ethylen- und/oder Propylenoxid, an niedermolekulare Polyole der bereits oben im Zusammenhang mit dem Polyesterpolyol als Ausgangsmaterial beispielhaft genannten Art. Besonders bevorzugt sind solche, den gemachten Angaben bezüglich des Molekulargewichts entsprechende Polyetherpolyole, die durch Propoxylierung von Bisphenol A oder Trimethylolpropan in an sich bekannter Weise hergestellt werden.

Bei den gegebenenfalls mitverwendeten Kettenverlängerungsmitteln 3) handelt es sich entweder um einfache niedermolekulare Polyole eines unter 400 liegenden Molekulargewichts, wie beispielsweise die im Zusammenhang mit der Herstellung der Polyesterpolyole als Ausgangsmaterialien beispielhaft genannten mehrwertigen, vorzugsweise zweiwertigen Alkohole und/oder um Aminogruppen aufweisende Verbindungen wie beispielsweise Hydrazin beziehungsweise Hydrazinhydrat oder organische Diamine des Molekulargewichtsbereichs 60 bis 400 wie beispielsweise Ethylendiamin, Hexamethylendiamin, 4,4'-Diamino-dicyclohexylmethan oder 3,3'-Dimethyl-4,4'-diamino-dicyclohexylmethan. Die niedermolekularen Kettenverlängerungsmittel 3) werden, falls überhaupt, in Mengen von bis zu 10 Gew.-7., bezogen auf das Gewicht der höhermolekularen Hydroxylverbindungen 2) eingesetzt.

Geeignete hydrophile Aufbaukomponenten 4) sind einwertige, Ethylenoxideinheiten-aufweisende Polyetheralkohole, insbesondere des Molekulargewichtsbereichs 350 bis 5.000, wie sie durch Addition von Ethylenoxid und gegebenenfalls anderen Alkylenoxiden an monofunktionelle Startermoleküle beispielsweise Methanol, n-Propanol, n-Butanol oder Butyldiglykol in an sich bekannter Weise zugänglich sind. Falls bei dieser Alkoxylierungsreaktion neben Ethylenoxid auch andere Alkylenoxide wie beispielsweise Propylenoxid eingsetzt werden, muß darauf geachtet werden, daß der Anteil des Ethylenoxids, bezogen auf die Gesamtmenge der Alkylenoxide, mindestens 40, vorzugsweise mindestens 80 Gew.-% ausmacht. Falls mehrere Alkylenoxide eingesetzt werden, können diese im Gemisch und/oder nacheinander bei der Alkoxylierungsreaktion eingesetzt werden.

Weitere hydrophile Aufbaukomponenten 4) sind organische Carbonsäuren, die neben den Carboxylgruppen mindestens einen, vorzugsweise zwei Reaktivgruppen aufweisen, die gegenüber Isocyanatgruppen eine höhere Reaktionsbereitschaft als Carboxylgruppen aufweisen. Vorzugsweise handelt es sich bei diesen Reaktivgruppen um primäre und/oder sekundäre Aminogruppen und insbesondere um alkoholische Hydroxylgruppen. Besonders gut geeignete derartige hydrophile Aufbaukomponenten sind α,α-Dimethylolalkancarbonsäuren mit insgesamt 5 bis 8 Kohlenstoffatomen, insbesondere Dimethylolpropionsäure. Ebenfalls geeignet sind beispielsweise Hydroxypivalinsäure oder Anlagerungsprodukte von Diaminen (z.B. Ethylendiamin oder Isophorondiamin an Acrylsäure entsprechend DE-OS 2 034 479.

Bei der Herstellung der Vorpolymerisate a) werden vorzugsweise sowohl Ethylenoxideinheiten aufweisende einwertige Alkohole der beispielhaften genannten Art als auch Amino- oder Hydroxycarbonsäuren der genannten Art in solchen Mengen eingesetzt, daß in den Vorpolymerisaten Ethylenoxideinheiten und Carboxylgruppen (bzw. nach Kombination mit der Komponente b) zumindest teilweise Carboxylatgruppen) innerhalb der oben genannten Bereiche vorliegen. Aufgrund der Verwendung von einwertigen, Ethylenoxideinheiten aufweisenden Polyetheralkoholen als Teil der Komponente 4) sind die hydrophilen Polyetherketten endständig oder (im Falle der Mitverwendung von verzweigend wirkenden höherfunktionellen Aufbaukomponenten) seitenständig angeordnet.

Als Blockierungsmittel 5) können Phenole, wie Phenol, Lactame, wie ε-Caprolactam, Oxime, wie Butanonoxim und sekundäre Amine, wie Diisopropylamin, Imidazol, Pyrazol oder 1,2,4-Triazol eingesetzt erden. Erfindungsgemäß bevorzugt sind Butanonoxim und Diisopropylamin.

Bei der Herstellung der Vorpolymerisate a) werden die höhermolekularen Polyhydroxylverbindungen 2) im allgemeinen in einer Menge von 20 bis 60, vorzugsweise 30 bis 55 Gew.-%, bezogen auf das Gesamtgewicht der Ausgangskomponenten 1) bis 5), eingesetzt. Das Äquivalentverhältnis von Isocyanatgruppen der Komponente 1) zu gegenüber Isocyanatgruppen reaktionsfähigen Gruppen der Komponenten 2) bis 4) (ohne Einbeziehung der in der Komponente 4) vorliegenden Carboxylgruppen) liegt im allgemeinen bei 1,5:1 bis 2,5:1. Die Menge des Blockierungsmittels 5) wird im allgemeinen so bemessen, daß der dann noch vorliegende Isocyanatüberschuß zumindest zu 90 %, vorzugsweise zu 100 % mit dem Blockierungsmittel abreagiert. Grundsätzlich möglich, jedoch keineswegs bevorzugt ist die Verwendung eines geringfügigen Unterschusses an Blockierungsmittel, so daß die NCO-Vorpolymerisate zunächst noch freie Isocyanatgruppen aufweisen, die dann während des Dispergierschritts mit dem Wasser oder einem Teil der Komponente b) abreagieren.

Bei der erfindungswesentlichen Komponente b) handelt es sich um (cyclo)aliphatische Polyamine mit insgesamt mindestens zwei primären und/oder sekundären Aminogruppen des Molekulargewichtsbereichs 60 bis 400, vorzugsweise 100 bis 250. Beispielhaft genannt seien Ethylendiamin, Hexamethylendiamin, Diethylentriamin, 4,4'-Diaminodicyclohexylmethan, 1,4-Diaminocyclohexan, 3,3,5-Trimethyl-5-aminomethylcyclohexylamin (IPDA) oder auch perhydrierte Triamino-diphenylmethane, wie sie gemäß DE-OS 3 417 683 zur Herstellung der entsprechenden cycloaliphatischen Triisocyanate eingesetzt werden. Beliebige Gemische derartiger Polyamine können ebenalls verwendet werden. Bevorzugt ist 3,3'-Dimethyl-4,4'-diamino-dicyclohexylmethan.

Die Polyamine b) werden bei der Herstellung der erfindungsgemäßen Bindemittelgemische in solchen Mengen eingesetzt, daß das Molverhältnis von blockierten Isocyanatgruppen der Komponente a) zu primären und/oder sekundären Aminogruppen der Komponente b) bei 1:0,9 bis 1:1,5, vorzugsweise 1:1 bis 1:1,1 liegt.

Die Herstellung der erfindungsgemäßen Bindemittelgemische kann beispielsweise dergestalt erfolgen, daß man die Ausgangspolyisocyanate 1) stufenweise oder im Sinne einer Eintopfreaktion mit den Ausgangskomponenten 2) bis 5) bei 60 bis 110°C zur Reaktion bringt, bis der theoretische NCO-Wert des Reaktionsgemisch (im allgemeinen völliges Verschwinden von freien Isocyanatgruppen) erreicht ist. Anschließend wird die Komponente b) eingerührt und mit Wasser auf den gewünschten Festkörpergehalt, der im allgemeinen bei 35 bis 55 Gew.-% liegt, verdünnt. Im allgemeinen beginnt man die Umsetzung in der Schmelze und setzt je nach Bedarf ein gegenüber Isocyanatgruppen inertes, mit Wasser mischbares Lösungsmittel, welches anschließend destillativ entfernt werden kann, beispielsweise Aceton hinzu. Die Entfernung des zugesetzten Lösungsmittels kann gewünschtenfalls im Anschluß an die Zugabe des Dispergierwassers destillativ erfolgen. Letztendlich erhält man die erfindungsgemäßen Bindemittelgemische in Form einer wäßrigen Lösung beziehungsweise Dispersion.

Den erfindungsgemäßen Bindemittelgemischen können die üblichen Hilfs- und Zusatzmittel der Lacktechnologie, wie beispielsweise Pigmente, Verlaufmittel, UV-Stabilisatoren, Antioxidantien, Füllstoffe, Thixotropiermittel oder Weichmacher zugemischt werden. Auf diese Weise entstehen gebrauchsfertige wäßrige Beschichtungsmittel, die bei Raumtemperatur praktisch unbegrenzt lagerfähig sind und bei relativ niedrigen Temperaturen von 120 bis 150°C zu Lackschichten mit ausgezeichneten mechanischen Eigenschaften aushärten. Da die Polyamine b) in den erfindungsgemäßen Beschichtungsmitteln die Doppelfunktion eines Härters für die blockierten NCO-Vorpolymerisate und eines Neutralisationsmittels für die eingebauten Carboxylgruppen innehaben, werden bei der thermischen Aushärtung keine der ansonsten in der Chemie der wäßrigen Polyurethandispersionen üblichen, als Neutralisationsmittel dienenden tert. Amine abgespalten. Das Neutralisationsmittel wird vielmehr in den Lackfilm eingebaut. Aus diesem Grund werden beim Einbrennvorgang nur relativ geringe Mengen an flüchtigen organischen Stoffen freigesetzt.

Die erfindungsgemäßen Bindemittelgemische werden besonders bevorzugt zur Herstellung von Unterbodenschutz-Beschichtungen und steinschlagfesten Füllern für Kraftfahrzeuge verwendet.

In den nachfolgenden Beispielen beziehen sich alle Prozentangaben auf das Gewicht.

### Beispiel 1

50%ige Dispersion eines erfindungsgemäßen Bindemittels, basierend auf einer aromatischen Isocyanatkomponente. Die das Reaktionsprodukt der erstgenannten 6 Ausgangskomponenten darstellende Komponente a) enthält 8,7 Gew.-% an innerhalb von end- beziehungsweise seitenständigen Polyetherketten eingebauten Ethylenoxideinheiten und 30,4 Milliäquivalente pro 100 g Feststoff an Carboxylgruppen.

### Ansatz

| | | |
|---|---|---|
| 323,0 g | (0,380 Val) | eines Adipinsäure-Hexandiol-1,6-Neopentylglykol-Polyesters mit der OH-Zahl 66, |
| 240,0 g | (0,240 Val) | eines Polyetherpolyols der OH-Zahl 56, hergestellt durch Propoxylierung von Trimethylolpropan, |
| 90,0 g | (0,040 Val) | eines einwertigen Polyetherpolyols der OH-Zahl 25 (Dispergator), hergestellt durch Ethoxylierung von n-Butanol, |
| 42,0 g | (0,626 Val) | Dimethylolpropionsäure, |
| 63,8 g | (0,734 Val) | Butanonoxim, |
| 271,0 g | (2,020 Val) | eines Rohr-MDI-Typs mit ca. 90 Gew.-% Zweikernanteil, wovon ca. 10 Gew.-% 2,4'-Diphenylmethandiisocyanat darstellen und ca. 10 Gew.-% an höherkernigen Anteilen, NCO-Gehalt ca. 31,3 %, |
| 96,0 g | (0,800 Val) | Bis-(4-amino-3-methyl-cyclohexyl)methan, |
| 1126,0 g | | Wasser (entsprechend 50 % Festkörperanteil) |
| 2251,8 g | | Bindemittel-Dispersion Viskosität bei 23°C ca. 1000 mPas |

### Durchführung

Man legt MDI in ca. 500 ml Aceton bei Raumtemperatur vor und trägt unter Rühren nacheinander den Polyester, die beiden Polyether in wasserfreier Form, Dimethylolpropionsäure und Butanonoxim ein. Man erwärmt die Reaktionsmischung langsam, MDI und Butanonoxim reagieren hierbei exotherm, auf Rückflußtemperatur von ca. 65°C und setzt ca. 10 h unter Rückflußbedingungen um. Nach dieser Reaktionszeit ist im IR-Spektrum meistens nur noch eine kleine NCO-Bande feststellbar. In diesem Fall gibt man noch 10 ml Butanonoxim hinzu und prüft nach 30 Minuten nochmals auf einen eventuellen Rest-NCO-Gehalt. Wenn kein NCO-Gehalt mehr vorhanden ist, wird das Diamin in den sich abkühlenden Ansatz eingerührt. Anschließend wird unter starkem Rühren bei ca. 45°C Wasser hinzugegeben. Es entsteht eine milchig-blaue Dispersion, die allerdings noch Aceton enthält. Letzteres wird bei ca. 45°C und erniedrigtem Druck (Endstand ca. 150 mbar) innerhalb von ca. 4 Stunden abdestilliert. Man erhält eine milchig-blaue feinteilige 50%ige Dispersion mit einer Viskosität von ca. 1.000 mPas (bei 23°C).

### Eigenschaften

Diese Einkomponenten-Bindemittel-Dispersion ist lagerstabil, z.B. 6 Monate bei 50°C unverändert. Die Dispersion wird grau pigmentiert und auf Prüfbleche appliziert. Nach dem Verdunsten des Wassers und dem Einbrennen bei 120°C (30 Minuten) wird eine Filmdicke von z.B. 364 µm ermittelt. Die Haftung ist gut. Die Beschichtung widersteht einem Beschuß mit Schrot (Saablux-Test) während 2 Minuten und 40 Sekunden ohne Beschädigung, was einen ausgezeichneten Wert darstellt.

### Beispiel 2

Erfindungsgemäßes Bindemittelgemisch auf Basis eines aliphatischen Polyisocyanats. Das das Umsetzungsprodukt der erstgenannten 7 Ausgangskomponenten bildende NCO-Vorpolymerisat a) enthält 13,7 Gew.-% an in end- beziehungsweise seitenständigen Polyetherketten eingebauten Ethylenoxideinheiten und 15,2 Milliäquivalente pro 100 g Feststoff an Carboxylgruppen.

### Ansatz

| | | |
|---|---|---|
| 336,0 g | (0,3 Val) | eines Adipinsäure-Butandiol-1,4-Polyesters mit der OH-Zahl 50, |
| 135,0 g | (0,06 Val) | des Dispergators gemäß Beispiel 1, |
| 20,1 g | (0,30 Val) | Dimethylolpropionsäure, |
| 99,9 g | (0,90 Val) | IPDI |
| 270,0 g | (1,35 Val) | eines Isocyanuratgruppen aufweisenden Polyisocyanats auf Basis von Hexamethyldiisocyanat (NCO-Gehalt 21 %) |
| 117,6 g | (1,23 Val) | Butanonoxim, |
| 10,0 g | (0,4 Val) | Hydrazinhydrat, |
| 114,7 g | (1,35 Val) | IPDA, |
| 1345,0 g | | Wasser (entsprechend 45 % Festkör- |
| | | pergehalt) |
| 2448,3 g | | Bindemittel-Dispersion |

### Durchführung

Polyester und Polyether werden vorgelegt und unter Rühren bei 110°C/15 mbar ca. 1 Stunde entwässert. Man läßt auf ca. 60°C erkalten und rührt in einem Guß die beiden Isocyanatkomponenten sowie portionsweise die Dimethylolpropionsäure ein. Danach gibt man kleinere Portionen Butanonoxim hinzu, wobei die Umsetzung exotherm wird. Man erwärmt und setzt bei 100 bis 110°C in der Schmelz um, bis der berechnete NCO-Gehalt von 1,5 % nach ca. 2 Stunden knapp unterschritten ist. Man läßt auf ca. 70°C erkalten, löst in ca. 1000 ml Aceton und gibt zur Kettenverlängerung Hydrazinhydrat hinzu. Die acetonische Lösung wird bei ca. 50°C noch 3 h nachgerührt, das IR-Spektrum zeigt eine minimale NCO-Bande an, mit IPDA vermischt und von Aceton, wie in Beispiel 1 bereits beschrieben, befreit. Man erhält eine milchig-blaue feinteilige 45%ige Dispersion mit einer Viskosität von ca. 2.000 mPas bei 23°C. Diese Einkomponenten-Bindemittel-Dispersion ist lagerstabil.

### Beispiel 3

Erfindungsgemäßes Bindemittelgemisch auf Basis von aliphatischen Polyisocyanaten. Das das Umsetzungsprodukt der erstgenannten 7 Ausgangskomponenten darstellende NCO-Vorpolymerisat a) enthält 13,2 Gew.-% an innerhalb von end- beziehungsweise seitenständigen Polyetherketten eingebauten Ethylenoxideinheiten und 27,9 Milliäquivalente pro 100 g Feststoff Carboxylgruppen.

### Ansatz

| | | |
|---|---|---|
| 448,0 g | (0,40 Val) | eines Adipinsäure-Butandiol-1,4-Polyesters mit der OH-Zahl 50, |
| 180,0 g | (0,08 Val) | des Dispergators gemäß Beispiel 1, |
| 133,2 g | (1,20 Val) | IPDI, |
| 360,0 g | (1,80 Val) | Polyisocyanat gemäß Beispiel 2, |
| 26,8 g | (0,40 Val) | Dimethylolpropionsäure, |
| 165,6 g | (1,64 Val) | Diisopropylamin, |
| 120,0 g | (0,4 Val) | eines Adduktes von 1 Mol IPDA (170 g) an 1 Mol Acrylsäure (72 g) in Waser (242 g); 1 Val einbaubares NH/NH₂ dieser Aminocarbonsäure sind 300 g, |
| 153,0 g | (1,8 Val) | IPDA, |
| 1623,0 g | | Wasser, entsprechend 45 % Festkörpergehalt |
| 3209,6 g | | Bindemittel-Dispersion |

### Durchführung

Polyester und Polyether werden unter Rühren bei 110°C/15 mbar während ca. 1 Stunde entwässert. Man kühlt auf ca. 70°C ab, verdünnt mit 120 g N-Methylpyrrolidon, gibt die Isocyanate in einem Guß hinzu, trägt die Dimethylolpropionsäure portionsweise ein und tropft Diisopropylamin zu dem gut gerührten Ansatz. Anschließend wird die Innentemperatur auf 100°C gesteigert. Nach einer Umsetzungsdauer von ca. 1 Stunde ist der berechnete NCO-Gehalt von 1,45 % knapp unterschritten. Man läßt auf ca. 60°C abkühlen, verdünnt mit ca. 1.200 ml Aceton und rührt die wäßrige Lösung des IPDA-Acrylsäure-Adduktes ein. Nach ca. 30 Minuten bei 40°C ist in der acetonischen Lösung kein NCO-Gehalt (IR-Spektrum) mehr nachweisbar. Man gibt IPDA hinzu und dispergiert mit Wasser. Danach wird Aceton, wie in Beispiel 1 erwähnt, während 4 Stunden abdestilliert (45°C/150 mbar). Man erhält eine milchig-blaue Dispersion mit einem Festkörpergehalt von 50 %, einem organischen Lösungsmittelanteil von 3,7 % und einer Viskosität bei 23°C von ca. 2.000 mPas.

## Patentansprüche

1. Wäßriges Bindemittelgemisch bestehend im wesentlichen aus einer wäßrigen Lösung und/oder Dispersion erhältlich durch zumindest teilweise Neutralisation
a) mindestens eines, in Gegenwart der Komponente b) in Wasser löslichen und/oder dispergierbaren, Urethan- und Carbonsäuregruppen aufweisenden NCO-Vorpolymerisats mit blockierten Isocyanatgruppen
mit
b) einer Polyamin-Komponente, bestehend aus mindestens einem organischen Polyamin des Molekulargewichtsbereichs 60 bis 400 mit insgesamt mindestens zwei primären und/oder sekundären, aliphatisch oder cycloaliphatisch gebundenen Aminogruppen,
wobei das Molverhältnis von blockierten Isocyanatgruppen zu primären und/oder sekundären Aminogruppen von 1:0,9 bis 1:1,5 beträgt und wobei andere Basen, die mit der Komponente a) Salze bilden abwesend sind.

2. Wäßriges Bindemittelgemisch gemäß Anspruch 1, **dadurch gekennzeichnet, daß** die Komponente a) einen Gehalt an blockierten Isocyanatgruppen (berechnet als NCO) von 2 bis 10 Gew.-%,
einen Gehalt an innerhalb von end- und/oder seitenständigen Polyetherketten eingebauten Ethylenoxideinheiten (berechnet als C₂H₄O) von 5 bis 20 Gew.-% und
einen Gehalt an, zumindest teilweise durch Reaktion mit der Komponente b) neutralisierten Carbonsäuregruppen von 10 bis 60 Milliäquivalenten pro 100 g Feststoff aufweist.

3. Verwendung des wäßrigen Bindemittelgemisches gemäß, Anspruch 1 oder 2, gegebenenfalls in Abmischung mit üblichen Hilfs- und Zusatzmitteln der Lacktechnologie zur Herstellung von Beschichtungen auf hitzeresistenten Substraten.

4. Verwendung gemäß Anspruch 3 zur Herstellung von Unterbodenschutz-Beschichtungen oder steinschlagfesten Füllern für Kraftfahrzeuge.

## Claims

1. Aqueous binder mixture comprising substantially an aqueous solution and/or dispersion obtainable by at least partial neutralisation of
a) at least one urethane group and carboxylic acid group-exhibiting NCO prepolymer having blocked isocyanate groups, which is soluble and/or dispersible in water in the presence of component b)
and
b) a polyamine component, comprising at least one organic polyamine of the molecular weight range 60 to 400 having in total at least two primary and/or secondary, aliphatically or cycloaliphatically bonded amino groups
the molar ratio of blocked isocyanate groups to primary and/or secondary amino groups being from 1 : 0.9 to 1 : 1.5 and other bases, which form salts with component a) being absent.

2. Aqueous binder mixture according to Claim 1, **characterised in that** component a) exhibits a blocked isocyanate group content (calculated as NCO) of from 2 to 10 wt-%,
a content of from 5 to 20 wt-% of ethylene oxide units (calculated as C₂H₄O) incorporated within polyether chains in the end and/or side position and
a content of from 10 to 60 milliequivalents per 100 g solids of carboxylic acid groups which are at least partially neutralised by reaction with component b).

3. Use of the aqueous binder mixture according to Claim 1 or 2, optionally mixed with conventional auxiliary substances and additives taken from paint technology for the preparation of coatings on heat-resistent substrates.

4. Use according to Claim 3 for the preparation of underfloor protective coatings or stone-chip resistant fillers for motor vehicles.

## Revendications

1. Mélange de liants aqueux constitué essentiellement d'une solution et/ou d'une dispersion aqueuse que l'on obtient par neutralisation au moins partielle
a) d'au moins un prépolymère NCO contenant des groupes isocyanates bloqués, présentant des groupes uréthane et des groupes d'acides carboxyliques, soluble et/ou apte à être dispersé dans de l'eau en présence du composant b)
avec
b) un composant de polyamine constitué par au moins une polyamine organique du domaine de poids moléculaire de 60 à 400, contenant au total au moins deux groupes amino primaires et/ou secondaires liés à des radicaux aliphatiques ou cycloaliphatiques,
dans lequel le rapport molaire des groupes isocyanates bloqués aux groupes amino primaires et/ou secondaires s'élève de 1 : 0,9 à 1 : 1,5 et dans lequel d'autres bases qui forment des sels avec le composant a) sont absentes.

2. Mélange de liants aqueux selon la revendication 1, **caractérisé en ce que** le composant a) présente une teneur en groupes isocyanates bloqués (calculés comme groupes NCO) de 2 à 10 % en poids,
une teneur en unités d'oxyde d'éthylène incorporées au sein de chaînes de polyéthers terminales et/ou latérales (calculées comme groupes C₂H₄O) de 5 à 20 % en poids, et
une teneur en groupes d'acides carboxyliques soumis à une neutralisation au moins partielle par réaction avec le composant b) de 10 à 60 milliéquivalents par 100 g de substance solide.

3. Utilisation du mélange de liants aqueux selon la revendication 1 ou 2, le cas échéant en mélange avec des adjuvants et des additifs habituels de la technologie des laques, des vernis ou des peintures pour la préparation d'enductions sur des substrats résistant à la chaleur.

4. Utilisation selon la revendication 3, pour la préparation d'enductions de protection de dessous de caisses ou de matières de charge résistant aux jets de pierre pour des véhicules automobiles.
